# FASCICULE DE BREVET EUROPEEN

(11) **EP 2 439 037 B1**
(45) Date de publication et mention de la délivrance du brevet: **13.12.2017**
(21) Numéro de dépôt: 11184116.9
(22) Date de dépôt: 06.10.2011
(51) Int. Cl.: B29C 33/44, B29C 33/76, B29C 41/04, B29C 41/38, B29C 41/40

(54) **MOULE MUNI D'UN BLOC MOBILE**
FORM, DIE MIT EINEM MOBILEN BLOCK AUSGESTATTET IST
MOULD PROVIDED WITH A MOBILE BLOCK

(30) Priorité: 08.10.2010 FR 1058195
(43) Date de publication de la demande: 11.04.2012
(73) Titulaire: Compagnie Plastic Omnium, 69007 Lyon (FR)
(72) Inventeur: Dougère, Jonathan, 56880 Ploeren (FR); Fontaine, Daniel, 01120 La Boisse (FR)
(74) Mandataire: Descazeaux, Charles

(56) Documents cités:
- JP-A- 6 182 789
- JP-A- 2006 346 995
- US-A- 5 061 165

## Description

La présente invention concerne un moule pour la fabrication de pièces creuses, notamment un moule pour le rotomoulage de conteneurs de collecte de déchets.

On connaît déjà dans l'état de la technique un moule pour le rotomoulage comprenant deux parties, une partie fixe et une partie mobile délimitant ensemble une chambre de moulage, et au moins un bloc mobile destiné à être agencé sur l'une des deux parties du moule, en regard d'un orifice ménagé dans cette partie.

Un tel bloc mobile est apte à prendre au moins deux positions relativement à la partie du moule, à savoir une position de moulage, dans laquelle le bloc se trouve en partie dans la chambre de moulage, et une position de démoulage dans laquelle il se trouve à l'extérieur de la chambre de moulage.

Grâce à un tel bloc mobile, il est possible de mouler un objet de forme complexe et qui ne pourrait être démoulé s'il était fabriqué à l'aide d'un moule d'un seul tenant, par exemple un moule présentant une dépression selon une direction perpendiculaire à la direction de moulage.

Dans l'état de la technique, le bloc mobile peut être verrouillé en position de moulage à l'aide de moyens de fixation par vissage, dont les vis sont serrées manuellement par l'opérateur. Lorsque l'on souhaite démouler la pièce fabriquée, on desserre les vis, par exemple à l'aide d'une clé à chocs, et on retire le bloc mobile en exerçant une force de traction sur celui-ci. Toutefois, en raison des nombreuses contraintes, notamment thermiques, subies par le moule durant le moulage, le retrait du bloc mobile de la chambre de moulage demande généralement une force importante de la part de l'opérateur.

Or, l'opération fatigante de traction d'un bloc mobile doit être effectuée de façon répétitive et alors que l'opérateur est susceptible de se trouver dans une position peu ergonomique, par exemple accroupi ou penché en avant. De plus, l'utilisation d'une clé à chocs est susceptible d'endommager le poignet de l'opérateur du fait des fortes vibrations qu'elle génère. Cette opération de retrait du bloc mobile de la chambre de moulage est donc pénible et susceptible de générer des troubles musculo-squelettiques (TMS).

Pour faciliter l'opération de retrait du bloc mobile du moule, on connaît un bloc mobile relié à une des parties du moule par une charnière guidant la course du bloc mobile et verrouillé en position de moulage à l'aide d'une « sauterelle », comprenant un élément fixe solidaire du moule et un élément mobile, tel qu'une tige solidaire du bloc mobile s'insérant dans l'élément fixe. Un levier permet alors de serrer la tige dans l'élément fixe. Un vérin peut également être interposé entre le bloc mobile et la charnière pour assurer un meilleur guidage du bloc mobile. Toutefois, même dans ce cas, dans lequel l'opérateur est soulagé d'une partie du poids du bloc mobile, les efforts qu'il doit développer pour retirer celui-ci du moule ne sont pas négligeables. En outre, l'effort à fournir pour desserrer la tige de la sauterelle est également important. Ainsi, il s'avère que ce dispositif n'est pas totalement satisfaisant, et encore susceptible d'engendrer des TMS chez certains opérateurs.

L'invention a pour objectif de fournir un moule permettant de réellement soulager l'opérateur, notamment lors du retrait d'un bloc mobile de la chambre de moulage, assurant ainsi à l'opérateur des conditions de travail optimales.

A cet effet, l'invention a pour objet un moule comprenant une partie définissant au moins partiellement une chambre de moulage, dans laquelle est ménagée au moins un orifice, et au moins un bloc mobile entre une position de moulage dans laquelle le bloc est inséré partiellement dans l'orifice et se trouve dans la chambre de moulage et une position de démoulage dans laquelle le bloc mobile se trouve hors de la chambre de moulage, le moule comprenant en outre:
- un organe métallique et un aimant polarisable, un élément parmi l'organe et l'aimant étant ménagé sur une pièce solidaire de la partie du moule et l'autre élément parmi l'organe et l'aimant étant ménagé une pièce solidaire du bloc mobile, de façon à être en regard l'un de l'autre lorsque le bloc mobile est en position de moulage,
- des moyens d'alimentation de l'aimant,
- des moyens de rappel élastiques agencés pour générer un effort sur le bloc mobile tendant à le ramener en position de démoulage.

Par « pièce solidaire du bloc mobile », on entend une pièce qui peut être le bloc mobile lui-même ou une pièce qui est fixée au bloc mobile, de façon à être fixe ou mobile relativement à celui-ci. Il en est de même pour la « pièce solidaire de la partie du moule ».

Grâce à l'invention, un démoulage facile du bloc mobile est possible. En effet, l'opération de verrouillage du bloc mobile en position de moulage est effectué grâce au système aimant -organe, par la force exercée par l'aimant sur l'organe.

Mais comme l'aimant est polarisable, il est possible de changer son aimantation à l'aide d'un courant électrique de caractéristiques prédéterminées de sorte que l'aimant n'attire plus l'organe métallique vers lui. On fait passer dans les moyens d'alimentation un tel courant lorsque l'on souhaite démouler la pièce moulée et placer le bloc mobile en position de démoulage.

Le bloc mobile est donc libre d'être placé en position de démoulage mais différentes contraintes dues au procédé de moulage ont tendance à le retenir dans la chambre de moulage. La force des moyens de rappel s'oppose à ces contraintes et permet à l'opérateur de retirer bien plus facilement le bloc mobile du moule, sans avoir à exercer un effort de traction trop important sur le bloc mobile.

De cette façon, les conditions de travail de l'opérateur sont considérablement améliorées. En effet, l'opération de verrouillage du bloc mobile dans la position de moulage ne demande plus aucun effort de la part de l'opérateur et l'opération de démoulage est grandement facilitée.

En outre, on remarquera que, du fait de l'utilisation de la force électromagnétique, il est plus rapide de verrouiller et déverrouiller le bloc mobile, puisque aucune opération mécanique, telle que serrer ou desserrer des moyens de fixation, n'est nécessaire pour le faire. De plus, si le moule comprend plusieurs blocs mobiles, ils peuvent tous être verrouillés simultanément. Le procédé selon l'invention permet donc un gain de temps.

Grâce à l'invention, il n'est pas non plus utile d'utiliser un système complexe de guidage du bloc mobile comprenant des éléments susceptibles de mal résister aux conditions de moulage telles que la chaleur, par exemple des vérins. Une maintenance très régulière du moule selon l'invention n'est donc pas nécessaire.

L'invention comprend également l'une ou plusieurs des caractéristiques de la liste suivante :
- un élément parmi l'aimant et l'organe métallique est ménagé sur une paroi externe de la partie du moule,
- le bloc mobile comprenant une portion destinée à demeurer à l'extérieur de la chambre de moulage lorsque le bloc mobile est en position de moulage, un des éléments parmi l'aimant et l'organe métallique est ménagé sur la paroi externe de la partie, l'autre des éléments est ménagé sur la portion du bloc mobile. Le dispositif est dans ce cas très simple et ne nécessite pas la présence d'un grand nombre de pièces pour assurer son bon fonctionnement,
- le moule comprend des moyens de guidage du bloc mobile reliés à ladite partie du moule, les moyens de guidage étant mobiles en rotation relativement à ladite partie, et comprenant par exemple un volet ou une tige. Ces moyens de guidage sont notamment aptes à maintenir le bloc mobile sur la partie lorsqu'il est en position de démoulage. Dans ce cas, on facilite encore le travail de l'opérateur, pour qui il n'est pas nécessaire de détacher le bloc mobile du moule et donc de le porter. On facilite également le guidage du bloc mobile dans la chambre de moulage,
- dans ce cas, un des éléments parmi l'organe et l'aimant peut être placé sur les moyens de guidage, l'autre élément pouvant être placé sur le bloc mobile. Une telle configuration, de structure plus complexe, présente notamment l'avantage de permettre une liberté de conception plus importante, autorisant à adjoindre sur le moule des moyens mécaniques, tels que des systèmes de levier, permettant à l'opérateur d'appliquer une force moins importante pour parvenir à placer les moyens de rappel en position contrainte et facilitant encore les conditions de travail de l'opérateur,
- le bloc mobile peut également être relié à la paroi externe du moule de façon à être mobile en rotation relativement au moule, par l'intermédiaire de moyens de guidage tels qu'une tige reliée à une de ses extrémité au bloc mobile. Dans ce cas, lorsque l'un des éléments parmi l'aimant et l'organe métallique est placé sur la paroi externe de la partie, l'autre élément peut être mis en place sur les moyens de guidage.
- les moyens de rappel sont d'un seul tenant avec au moins l'un des composants parmi une pièce solidaire de la partie du moule et une pièce solidaire du bloc mobile, ce qui permet de simplifier la mise en place du bloc mobile sur la partie du moule,
- le bloc mobile comprenant une portion destinée à rester à l'extérieur de la chambre de moulage lorsque le bloc mobile est en position de moulage, les moyens de rappel élastique sont interposés entre la paroi externe du moule et la portion du bloc mobile,
- les moyens de rappel comprennent au moins un ressort hélicoïdal, en compression lorsque le bloc mobile est en position de moulage,
- le moule comprend des moyens de préhension, pour permettre à un opérateur de placer le bloc mobile en position de moulage et/ou de démoulage,
- les moyens de préhension peuvent notamment comporter une poignée agencée sur le bloc mobile, en particulier des poignées situées de chaque côté du bloc mobile. Cela rend ainsi les opérations de mise en place du bloc mobile dans la partie du moule et de retrait du bloc mobile de cette partie plus faciles à effectuer pour l'opérateur car le bloc mobile est plus ergonomique,
- les moyens de préhension peuvent également comprendre au moins une poignée agencée sur les moyens de guidage, à distance de l'axe de rotation des moyens de guidage relativement à la partie du moule. Cette poignée est notamment mobile en rotation relativement aux moyens de guidage selon un axe parallèle à l'axe précité. Une telle poignée permet de générer un effet de levier qui limite l'effort à mettre en oeuvre par l'opérateur pour placer le bloc mobile en position de moulage et contraindre les moyens de rappel,

L'invention sera mieux comprise à la lecture de la description qui va suivre, donnée uniquement à titre d'exemple et faite en se référant aux dessins dans lesquels :
- la figure 1 est une vue en coupe présentant un détail d'un moule selon un premier mode de réalisation de l'invention,
- la figure 2 une vue en coupe présentant un détail d'un moule selon un deuxième mode de réalisation de l'invention,
- la figure 3A une vue en coupe présentant un détail d'un moule selon un troisième mode de réalisation de l'invention, lorsque le bloc mobile est en position de démoulage,
- la figure 3B représente en coupe le détail de la figure 3A lorsque le bloc mobile est en position de moulage.

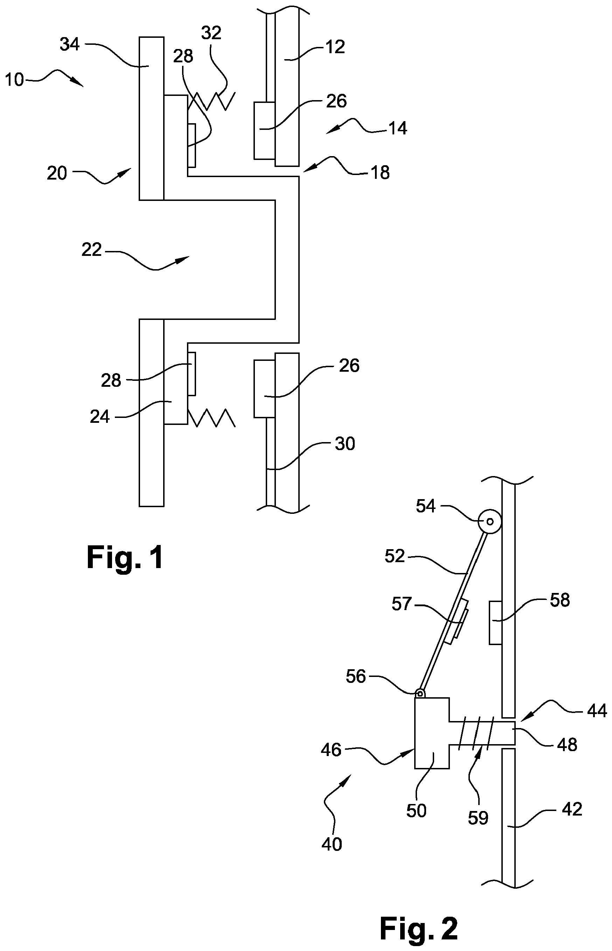

On a représenté sur les figures un détail d'un moule 10 selon un premier mode de réalisation de l'invention. Le moule 10 est un moule de rotomoulage d'un conteneur de déchets. Il comprend deux parties, dont la partie 12 présentant une paroi représentée sur la figure 1, qui délimite une chambre de moulage 14. En vue du démoulage d'une pièce moulée dans la chambre de moulage 14, la partie du moule non représentée est mobile par rapport à la partie 12.

Un orifice 18 est ménagé dans la paroi de la partie 12 et un bloc mobile 20 est prévu pour être inséré dans l'orifice 18. Ce bloc mobile 20 est mobile relativement à la partie 12, entre une position de moulage dans laquelle il est inséré dans l'orifice et se trouve partiellement dans la chambre de moulage, et une position de démoulage représentée sur la figure 1, dans laquelle il est situé entièrement à l'extérieur de la chambre de moulage.

Le bloc mobile 20 présente une dépression 22 de section en U et de profil essentiellement cylindrique et une collerette 24 périphérique entourant la dépression. La dépression 22 forme une portion du bloc mobile destinée à être insérée dans la chambre de moulage lorsque le bloc 20 est en position de moulage. Elle présente des dimensions complémentaires de celles de l'orifice permettant d'éviter que la matière ne fuie à l'extérieur du moule. La collerette 24 est quant à elle destinée à s'appuyer contre la paroi de la partie 12 du moule lorsque le bloc mobile 20 est en position de moulage.

Le moule comprend également des moyens de verrouillage du bloc mobile en position de moulage. Ces moyens de verrouillage comprennent deux ensembles électromagnétiques 26 comportant chacun au moins un aimant permanent polarisable. Chaque ensemble est agencé sur la face externe de la paroi de la partie 12 du moule en bordure de l'orifice 18, de chaque côté de celui-ci. Ils comprennent également deux organes métallique 28 formés par deux plaques rapportées sur le bloc mobile, sur la face de la collerette tournée vers la partie 12 du moule.

Les ensembles 26 et les organes métalliques 28 sont rapportés respectivement sur la partie 12 et le bloc mobile 20 par vissage.

Les ensembles électromagnétiques 26 sont placés sur la paroi du moule de façon à être en regard de la collerette 24. Ils peuvent ainsi être placés chacun en regard d'un organe métallique 28.

Le moule comprend également des moyens d'alimentation de l'aimant permanent, comprenant au moins une bobine reliée électriquement par l'intermédiaire de câbles 30 à un connecteur de la partie du moule. Un tel connecteur est apte à être relié au secteur à l'aide d'une prise classique.

De cette façon, le bloc mobile 20 peut être maintenu en position de moulage par l'aimant de l'ensemble 26 attirant vers lui l'organe métallique 28, une fois qu'il est polarisé. La force générée par l'aimant permet de maintenir la collerette 24 du bloc mobile 20 contre la partie 12. En effet, du fait de cette force, une face de contact de l'organe 28 vient se plaquer contre une face de contact du système aimanté 26.

Ainsi, lorsque l'on souhaite que l'aimant exerce une force sur l'organe 28, on polarise l'aimant en faisant passer un courant dans les moyens d'alimentation et les bobines. L'aimant est alors polarisé de façon permanente et est susceptible d'attirer vers lui l'organe métallique 28 et d'assurer le verrouillage du bloc mobile en position de moulage.

Lorsqu'on souhaite déverrouiller le moule, on applique dans la bobine un courant électrique inverse qui permettra d'inverser la polarisation de l'aimant. L'organe métallique ne se trouve ainsi plus attiré par l'aimant. On ne détaille pas plus avant un tel système, connu en soi et disponible dans le commerce.

Des ressorts hélicoïdaux 32 sont également agencés sur le bloc mobile 20, au voisinage des organes métalliques 28. Ainsi, lorsque le bloc mobile est en position de moulage, les ressorts sont interposés entre la paroi de la partie 12 du moule et la collerette 24 du bloc mobile 20. La longueur de ces ressorts 32 est choisie de sorte qu'ils soient en compression lorsque le bloc mobile est en position de moulage. La force générée par ces ressorts sur le bloc mobile est opposée à celle de l'aimant mais n'est pas supérieure à celle de l'aimant. Ainsi, le bloc mobile demeure en position de moulage lorsque l'aimant est polarisé. Toutefois, lorsque la polarisation de l'aimant est inversée, l'action du ressort permet de retirer au moins partiellement le bloc mobile du moule facilitant ainsi la tâche de l'opérateur.

Le bloc mobile comprend également des moyens de préhension 34 agencés sur la face de sa collerette tournée vers l'extérieur du moule, ces moyens étant et constitués par deux poignées opposées dimensionnées pour que l'opérateur puisse facilement s'en saisir.

On va maintenant décrire un détail d'un moule selon un deuxième mode de réalisation de l'invention.

Dans ce mode de réalisation, le moule 40 comprend également deux parties dont une partie 42 représentée sur la figure. Une paroi de cette partie 42 comprend un orifice 44 et un bloc mobile 46 est destiné à être inséré partiellement dans l'orifice lorsqu'il se situe dans une position de moulage. Le bloc peut également être placé en dehors de l'orifice lorsqu'il se situe dans une position de démoulage, comme représenté sur la figure 2.

Le bloc mobile 46 est cylindrique de révolution et présente un profil en T. Il comprend un corps 48 destiné à être inséré dans l'orifice 44 et de dimensions complémentaires à celle de l'orifice et une tête 50 essentiellement perpendiculaire au corps. La tête 50 du bloc mobile comprend ainsi un épaulement destiné à être placé à proximité de la paroi du moule lorsque le corps est inséré dans l'orifice.

Le mouvement du bloc est guidé entre la position de moulage et la position de démoulage grâce à un système de guidage comprenant une tige reliée à une de ses extrémités à la partie 42 et à l'autre de ces extrémités au bloc mobile 46. La tige est reliée respectivement à la partie 42 et au bloc mobile de sorte qu'elle soit mobile en rotation relativement au bloc mobile et à la partie du moule. A chacune des extrémités de la tige, est ainsi agencée une charnière 54, 56. Les charnières 54, 56 permettent la rotation de la tige relativement à deux axes parallèles entre eux et perpendiculaires à la normale à la paroi de la partie du moule. De cette façon, le bloc mobile peut être guidé en translation dans la chambre de moulage et en dehors de celle-ci.

Un ensemble électromagnétique 58 tel que celui précédemment décrit est agencé sur la face externe de la paroi du moule, à distance de l'orifice 44, et un organe métallique 57 est rapporté sur la tige de façon à être situé en regard de l'ensemble électromagnétique 58. Comme précédemment décrit, le moule comprend des moyens d'alimentation électrique permettant de polariser un aimant permanent de l'ensemble 58. De cette façon, on peut verrouiller le bloc mobile en position de moulage grâce à l'ensemble 58 et à l'organe 57, de la façon décrite dans le mode de réalisation précédent.

Le moule comprend également un ressort hélicoïdal 59 enroulé autour du corps 48 du bloc mobile. La longueur du ressort est choisie de sorte que le ressort est en compression quand le bloc mobile est en position de moulage. Il est alors retenu entre la paroi de la partie 42 et l'épaulement 52 du bloc mobile. Le ressort facilite ainsi le retrait du bloc mobile de la chambre de moulage. La force du ressort est également choisie pour être inférieure à la force générée par l'aimant.

Le moule peut également comprendre des moyens de blocage en rotation de l'une des charnières 54 ou 56, pour éviter que le bloc mobile, une fois en position de démoulage, se replace au moins en partie dans la chambre de moulage, empêchant alors le démoulage de la pièce. En effet, si on bloque en rotation la charnière 56, le bloc mobile ne peut plus effectuer un mouvement de translation mais uniquement un mouvement de rotation qui se trouvera bloqué par la paroi de la partie 12.

On va maintenant décrire le moule 60 selon un troisième mode de réalisation de l'invention.

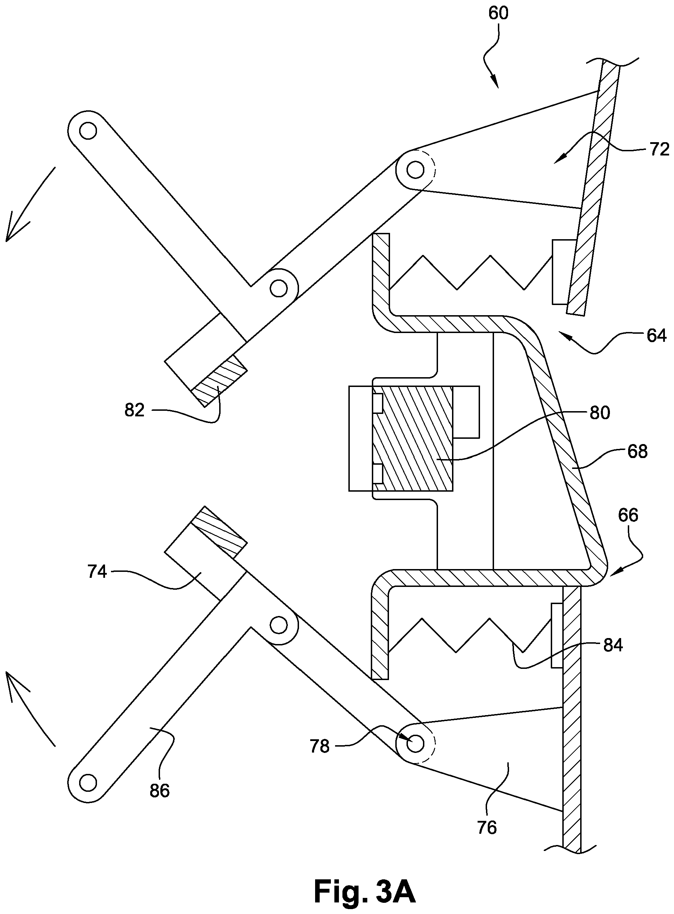

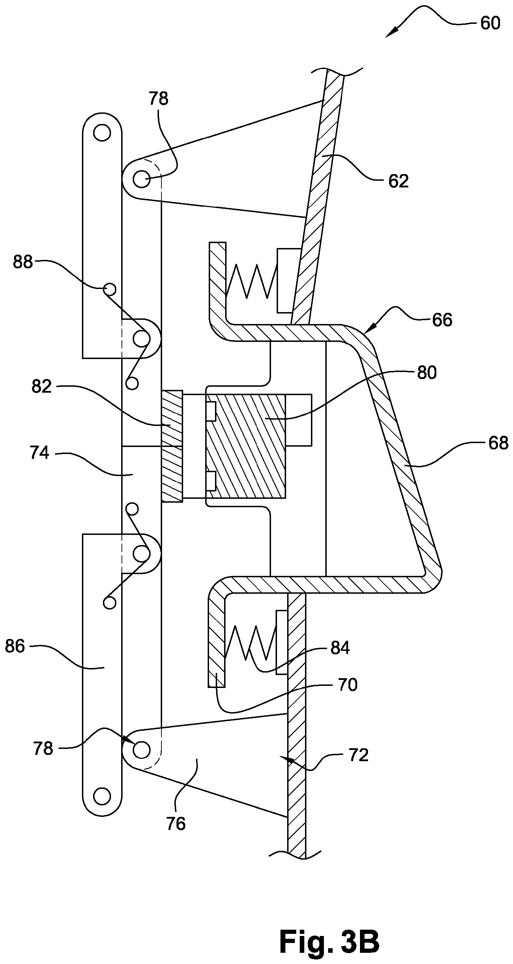

On a représenté sur les figures 3A et 3B une paroi d'une partie 62 d'un moule présentant un orifice 64, ainsi qu'un bloc mobile 66. Comme dans le mode de réalisation de la figure 1, le bloc mobile présente une dépression 68 ayant une section essentiellement en forme de U et une collerette 70 entourant la dépression. Il est mobile entre une position de moulage représentée sur la figure 3B, dans laquelle le bloc est partiellement dans la chambre de moulage et une position de démoulage représentée sur la figure 3A, dans laquelle le bloc mobile est en dehors de la chambre de moulage.

Le moule comprend également, d'un seul tenant avec la partie 62, deux supports 72 destinés à recevoir chacun un volet 74 mobile en rotation relativement au support. Chaque support est plus particulièrement constitué par deux ailettes 76 essentiellement normales à la paroi de la partie 62 du moule dans laquelle est ménagée l'orifice 64. Chaque ailette comprend en partie supérieure une ouverture destinée à accueillir un axe 78 solidaire du volet 74. Les axes des deux volets sont parallèles.

Le bloc mobile est solidaire d'un système électromagnétique 80 placé dans la dépression 68 de celui-ci et tel que décrit plus haut. Il est tourné vers l'extérieur du moule. Un tel système comprend également un aimant polarisable et des moyens d'alimentation de cet aimant sont prévus.

Chaque volet 74 comprend également, à son extrémité libre, opposée l'axe 78 un organe métallique 82, sur une face tournée vers la partie 62 lorsque le volet est horizontal. Les supports 72 et les volets 74 sont conformés de sorte que, lorsque les volets sont essentiellement horizontaux et le bloc mobile en position de moulage, les organes se trouvent en regard du système électromagnétique 80 et peuvent être attirés par l'aimant de ce système, pour se plaquer contre celui-ci.

Le moule comprend également des ressorts hélicoïdaux 84 interposés entre la paroi de la partie 62 du moule et une face de la collerette 70 du bloc mobile tournée vers le moule. Les ressorts sont reliés à la fois au bloc mobile et à la paroi de la partie 62. Un ressort 84 est plus particulièrement agencé de chaque côté du bloc mobile. La longueur de ces ressorts est choisie pour correspondre essentiellement à la position dans lequel le bloc mobile est dans la position de démoulage.

Comme on le voit sur les figures, le moule comprend également des poignées 86 solidaire chacune d'un volet 74 et mobile en rotation relativement à celui-ci selon un axe parallèle à l'axe de rotation du volet autour du support. L'axe de rotation de la poignée relativement au volet est situé entre l'axe de rotation 78 et l'extrémité libre du volet, au voisinage de l'extrémité libre. Les volets et poignées permettent d'obtenir un effet de levier qui autorise un opérateur à comprimer les ressorts 84 sans effectuer un effort trop important susceptible de générer des TMS.

Des moyens de rappel élastiques, tels qu'un ressort en torsion, sont également agencés au voisinage de chaque axe, pour ramener chaque poignée dans une position dans laquelle elle est parallèle au volet 74.

Ainsi, lorsque le bloc mobile est en position de démoulage, comme on le voit sur la figure 3A, le volet est maintenu en position quasi-verticale par la collerette 70 du bloc mobile.

Si l'opérateur souhaite placer le bloc mobile en position de verrouillage, il alimente le système électromagnétique 80 de façon à polariser l'aimant permanent et relève les poignées. Cela entraîne un mouvement des volets vers le bas de façon à se rapprocher de leur position horizontale. Ils compriment ainsi les ressorts 84 et permettent aux organes 82 de se rapprocher du système 80. Une fois les organes suffisamment proches du système 80, ils sont attirés par l'aimant de celui-ci et se plaquent contre celui-ci, verrouillant ainsi les volets 74 en position horizontale et le bloc mobile en position de moulage.

Lorsque l'on souhaite démouler la pièce située dans le moule, on alimente à nouveau le système électromagnétique pour inverser la polarité de celui-ci. Les organes ne sont ainsi plus attirés par le système 80 et le bloc mobile est replacé en position de démoulage sous l'action des ressorts 84 qui se détendent pour retrouver leur longueur de repos. Les volets retrouvent ainsi une position telle que celle de la figure 3A.

On notera que l'invention n'est pas limitée à ce qui a été décrit.

Un moule peut par exemple comprendre une pluralité de blocs mobiles.

En outre, la forme de l'un ou plusieurs des blocs mobiles peut être différente de celles qui ont été décrites.

La disposition des aimants et organes peut être différente de ce qui a été décrit. Par exemple, l'organe peut être ménagé sur la partie du moule tandis que l'aimant est ménagé sur le bloc mobile.

De plus, le nombre d'organes, d'aimants et de ressorts n'est pas limité à ce qui a été décrit.

Les moyens de rappel élastique peuvent également être des moyens autres que des ressorts hélicoïdaux.

En outre, le moule peut être dépourvu de moyens de guidage du bloc mobile ou de moyens de préhension de celui-ci.

## Revendications

1. Moule (10;40;60) **caractérisé en ce qu'**il comprend :
- une partie (12 ;42 ;62) définissant au moins une portion d'une chambre de moulage (14), dans laquelle est ménagée au moins un orifice (18 ;44 ;64),
- un bloc (20 ;46 ;66) mobile entre une position de moulage dans laquelle le bloc est inséré partiellement dans l'orifice et se trouve dans la chambre de moulage et une position de démoulage dans laquelle le bloc mobile se trouve hors de la chambre de moulage,
- un organe métallique (28 ;57 ;82) et un aimant polarisable (26 ;58 ;80), un élément parmi l'organe et l'aimant étant ménagé sur une pièce (12 ;42 ;74) solidaire de la partie du moule et l'autre élément parmi l'organe et l'aimant étant ménagé sur une pièce (20 ;46 ;66) solidaire du bloc mobile, de façon à être en regard l'un de l'autre lorsque le bloc mobile est en position de moulage,
- des moyens d'alimentation (30) de l'aimant,
- des moyens de rappel élastiques (32 ;59 ;84) agencés pour générer un effort sur le bloc mobile tendant à le ramener en position de démoulage.

2. Moule selon la revendication précédente, dans lequel un élément (26 ;58) parmi l'aimant et l'organe métallique est ménagé sur une paroi externe (12) de la partie du moule.

3. Moule selon la revendication précédente, dans lequel, le bloc mobile comprenant une portion (24 ;50) destinée à demeurer à l'extérieur de la chambre lorsque le bloc mobile est en position de moulage, l'autre des éléments (26 ;57) est ménagé sur la portion du bloc mobile.

4. Moule selon l'une quelconque des revendications précédentes, dans lequel le moule comprend des moyens de guidage (52 ;74) du bloc mobile reliés à ladite partie du moule, les moyens de guidage étant mobiles en rotation relativement à ladite partie, et comprenant par exemple un volet ou une tige

5. Moule selon la revendication précédente, dans lequel un des éléments (57 ;82) est placé sur les moyens de guidage et l'autre des éléments (58 ;80) est placé sur le bloc mobile, notamment sur la portion de celui-ci.

6. Moule selon la revendication 4, dans lequel les moyens de guidage (52) sont également reliés au bloc mobile.

7. Moule selon la revendication précédente prise en combinaison avec la revendication 2, dans lequel l'autre des éléments (57) est agencé sur les moyens de guidage (52).

8. Moule selon l'une quelconque des revendications précédentes, dans lequel les moyens de rappel (32 ;59 ;84) sont d'un seul tenant avec au moins l'un des composants parmi une pièce solidaire de la partie du moule et une pièce solidaire du bloc mobile.

9. Moule selon l'une quelconque des revendications précédentes, dans lequel, le bloc mobile comprenant une portion (24 ;50 ;70) destinée à rester à l'extérieur de la chambre de moulage lorsque le bloc mobile est en position de moulage, les moyens de rappel élastique (32 ;59 ;84) sont interposés entre la paroi externe du moule et la portion du bloc mobile.

10. Moule selon l'une quelconque des revendications précédentes, dans lequel le moule comprend des moyens de préhension (34 ;86), permettant à un opérateur de placer le bloc mobile en position de moulage et/ou de démoulage.

11. Moule selon la revendication précédente, dans lequel les moyens de préhension comprennent :
- au moins une poignée (34) agencée sur le bloc mobile.
- au moins une poignée (86) agencée sur les moyens de guidage au voisinage à distance de l'axe (78) de rotation des moyens de guidage relativement à la partie du moule et mobile en rotation relativement à ceux-ci selon un axe parallèle à l'axe précité (78).

## Patentansprüche

1. Formwerkzeug (10; 40; 60), **dadurch gekennzeichnet, dass** es Folgendes umfasst:
- einen Teil (12; 42; 62), der mindestens einen Abschnitt einer Formungskammer (14) definiert, in dem mindestens eine Öffnung (18; 44; 64) ausgebildet ist;
- einen Block (20; 46; 66), der beweglich ist zwischen einer Formungsposition, in welcher der Block teilweise in die Öffnung eingeführt ist und sich in der Formungskammer befindet, und einer Entformungsposition, in der sich der bewegliche Block außerhalb der Formungskammer befindet,
- ein metallisches Organ (28; 57; 82) und einen polarisierbaren Magnet (26; 58; 80), wobei ein Element aus dem Organ und dem Magnet auf einem Teil (12; 42, 74) angeordnet ist, das mit dem Teil des Formwerkzeugs fest verbunden ist, und wobei das andere Element aus dem Organ und dem Magnet auf einem Teil (20; 46, 66) angeordnet ist, das mit dem beweglichen Block fest verbunden ist, derart, dass das eine dem anderen gegenüberliegt, wenn der bewegliche Block in der Formungsposition ist,
- Mittel zum Versorgen (30) des Magneten,
- Rückstellfedermittel (32; 59; 84), die vorgesehen sind, um eine Kraft auf den beweglichen Block zu erzeugen, die dazu neigt, ihn in die Entformungsposition zurückbringen.

2. Formwerkzeug nach dem vorhergehenden Anspruch, wobei ein Element (26; 58) aus dem Magnet und dem metallischen Organ auf einer Außenwand (12) des Teils des Formwerkzeugs ausgebildet ist.

3. Formwerkzeug nach dem vorhergehenden Anspruch, wobei , da der bewegliche Block einen Abschnitt (24; 50) umfasst, der dazu bestimmt ist, außerhalb der Kammer zu verbleiben, wenn der bewegliche Block in der Formungsposition ist, das andere der Elemente (26; 57) auf dem Abschnitt des beweglichen Blocks ausgebildet ist.

4. Formwerkzeug nach einem der vorhergehenden Ansprüche, wobei das Formwerkzeug Mittel zum Führen (52; 74) des beweglichen Blocks umfasst, die mit dem Teil des Formwerkzeugs verbunden sind, wobei die Führungsmittel relativ zu dem Teil drehbeweglich sind und zum Beispiel eine Klappe oder eine Stange umfassen.

5. Formwerkzeug nach dem vorhergehenden Anspruch, wobei eines der Elemente (57; 82) auf den Führungsmitteln platziert ist und das andere der Elemente (58; 80) auf dem beweglichen Block platziert ist, insbesondere auf dem Abschnitt von diesem.

6. Formwerkzeug nach Anspruch 4, wobei die Führungsmittel (52) auch mit dem beweglichen Block verbunden sind.

7. Formwerkzeug nach dem vorhergehenden Anspruch in Kombination mit Anspruch 2, wobei das andere der Elemente (57) auf den Führungsmitteln (52) vorgesehen ist.

8. Formwerkzeug nach einem der vorhergehenden Ansprüche, wobei die Rückstellmittel (32; 59; 84) mit mindestens einer der Komponenten aus einem Teil, das mit dem Teil des Formwerkzeugs fest verbunden ist, und einem Teil, das mit dem beweglichen Block fest verbunden ist, einstückig ist.

9. Formwerkzeug nach einem der vorhergehenden Ansprüche, wobei , da der bewegliche Block einen Abschnitt (24; 50; 70) umfasst, der dazu bestimmt ist, außerhalb der Formungskammer zu bleiben, wenn der bewegliche Block in Formungsposition ist, die Rückstellfedermittel (32; 59; 84) zwischen der Außenwand des Formwerkzeugs und dem Abschnitt des beweglichen Blocks angeordnet sind.

10. Formwerkzeug nach einem der vorhergehenden Ansprüche, wobei das Formwerkzeug Greifmittel (34; 86) umfasst, die es einem Bediener gestatten, den beweglichen Block in Formungs- und/oder Entformungsposition zu bringen.

11. Formwerkzeug nach dem vorhergehenden Anspruch, wobei die Greifmittel Folgendes umfassen:
- mindestens einen Griff (34), der auf dem beweglichen Block vorgesehen ist,
- mindestens einen Griff (86), der auf den Führungsmitteln in der Nähe im Abstand zu der Rotationsachse (78) der Führungsmittel relativ zu dem Teil des Formwerkzeugs und drehbeweglich relativ zu diesen gemäß einer Achse parallel zu der oben genannten Achse (78) vorgesehen ist.

## Claims

1. Mould (10; 40; 60) **characterised in that** it comprises:
- a section (12; 42; 62) defining at least one portion of a moulding chamber (14), wherein at least one orifice (18; 44; 64) is provided,
- a block (20; 46; 66) movable between a moulding position in which the block is partially inserted in the orifice and is located in the moulding chamber and a demoulding position in which the movable block is located outside the moulding chamber,
- a metallic member (28; 57; 82) and a polarisable magnet (26; 58; 80), one element amongst the member and the magnet being arranged on a part (12; 42; 74) attached to the mould section and the other element amongst the member and the magnet being arranged on a part (20; 46; 66) attached to the movable block so as to be facing one another when the movable block is in the moulding position,
- means (30) for powering the magnet,
- springback means (32; 59; 84) arranged to generate a force on the movable block tending to return it to the demoulding position.

2. Mould according to the preceding claim, wherein an element (26; 58) amongst the magnet and the metallic member is formed on an outer wall (12) of the mould section.

3. Mould according to the preceding claim, wherein the movable block comprising a portion (24; 50) intended to remain outside the chamber when the movable block is in the moulding position, the other of the elements (26; 57) is formed on the portion of the movable block.

4. Mould according to any one of the preceding claims, wherein the mould comprises means (52; 74) for guiding the movable block connected to said mould section, the guide means being movable in rotation relative to said section, and comprising for example a flap or a rod

5. Mould according to the preceding claim, wherein one of the elements (57; 82) is placed on the guide means and the other of the elements (58; 80) is placed on the movable block, in particular on the portion thereof.

6. Mould according to claim 4, wherein the guide means (52) are also connected to the movable block.

7. Mould according to the preceding claim taken in combination with claim 2, wherein the other of the elements (57) is arranged on the guide means (52).

8. Mould according to any one of the preceding claims, wherein the return means (32; 59; 84) are integral with at least one of the components amongst an integral part of the mould section and an integral part of the movable block.

9. Mould according to the any one of the preceding claims, wherein, the movable block comprising a portion (24; 50; 70) intended to remain outside the moulding chamber when the movable block is in the moulding position, the springback means (32; 59; 84) are interposed between the outer wall of the mould and the portion of the movable block.

10. Mould according to any one of the preceding claims, wherein the mould comprises gripping means (34; 86), allowing an operator to place the movable block in the moulding and/or demoulding position.

11. Mould according to the preceding claim, wherein the gripping means comprise:
- at least one handle (34) arranged on the movable block.
- at least one handle (86) arranged on the guide means near to the axis (78) of rotation of the guide means relative to the mould section and movable in rotation thereto about an axis parallel to the above-mentioned axis (78).
